# EUROPEAN PATENT APPLICATION

(11) **EP 1 384 557 A1**
(43) Date of publication of application: **28.01.2004**
(21) Application number: 03016492.5
(22) Date of filing: 22.07.2003
(51) Int. Cl.: B27K 3/50, C09D 7/12

(54) **Synergic combinations of tetramethylpiperidine derivatives and benzotriazole derivatives for the protection of wood against light**

(30) Priority: 23.07.2002 IT MI20021622
(71) Applicant: 3V SIGMA S.p.A, 20121 Milano (IT)
(72) Inventor: Brena, Marco, 24100 Bergamo (IT); Accardi, Italo, 24100 Bergamo (IT)
(74) Representative: Minoja, Fabrizio, Dr.

(57) **Abstract**

The present invention relates to a method and colourless varnishes for the protection of the natural colour of wood against the light.

## Description

The present invention relates to a method and colourless varnishes for the protection of the natural colour of wood against the light.

### BACKGROUND OF THE INVENTION

The degradation of wood, whether untreated or impregnated with synthetic dyes, by solar radiation, is a well-known phenomenon. It leads to alterations in the surface appearance and mechanical characteristics of the product.

It is known that such damage can be limited by impregnating the surface of the wood with compounds belonging to the class of sterically hindered amines, dissolved in suitable solvents, as described, for example, in US 5,171,328 and US 6,187,387.

In accordance with known impregnation methods, sterically hindered amines can be associated with conventional UV filters such as benzophenones and benzotriazoles.

The need to protect wooden products, while altering the original characteristics of the starting material as little as possible, is attracting particular interest at present. The problem is particularly acute in the case of certain woods such as cherry, maple and ash, whose natural colour undergoes considerable variations, depending on the extent of exposure to light.

### SUMMARY OF THE INVENTION

It has now been found that the surface of wood, especially pale woods and those with particular shades of colour such as ash, maple and cherry, can be protected against variations in their natural colour caused by sunlight by applying to the surface of the wood colourless varnishes containing specific synergic combinations of a tetramethylpiperidine derivative and a benzotriazole derivative.

Therefore, the present invention provides a method of protecting wood against light, which involves applying varnishes containing said specific synergic combinations to the surface of the wood.

The invention also relates to varnishes containing said specific combinations.

### DETAILED DESCRIPTION OF THE INVENTION

The synergic combinations which can be used according to the invention comprise:
a) at least one tetramethylpiperidine derivative of general formula (I) 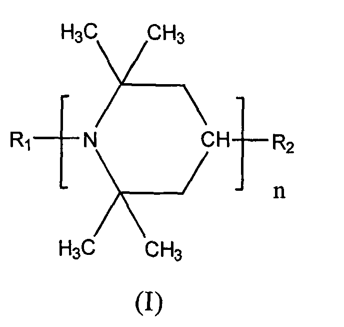 wherein:
   R₁ = H, -CH₃;
   when n=1, R₂ represents -OH or -NHR₃ with R₃ = C₁-C₈ alkyl;
   when n=2, R₂ represents a -OOC- (CH₂)ₘ- COO- group with m = 1-8;
   and
b) at least one benzotriazole of general formula (II) 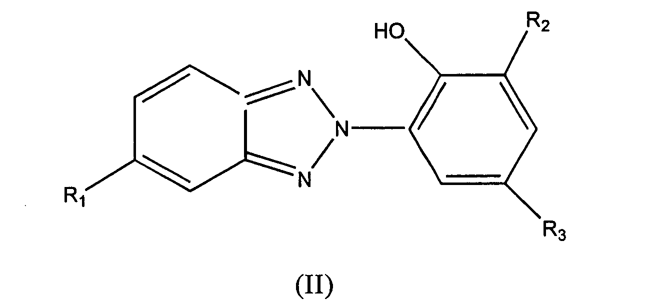
wherein:
R₁= H or Cl;
R₂ and R₃, which are the same or different, represent hydrogen or C₁-C₅ alkyl.

Of the compounds of formula (I), those in which, when n=1, R₁ represents H and R₂ represents -OH or -NH-n-butyl and those in which, when n=2, R₁ represents methyl and R₂ represents the -OOC-(CH₂)₆-COO- group are particularly preferred for the purposes of this invention; of the compounds of formula (II), those in which R₁ and R₂ represent hydrogen and R₃ represents methyl or those in which R₁ represents chlorine, R₂ tert-butyl and R₃ methyl are particularly preferred.

The weight ratios between component a) and component b) are between 30:70 and 70:30.

Said combinations, as defined above, can be incorporated by dissolution or dispersion in a colourless varnish based on water, organic solvents or mixtures of water and organic solvents, in percentages ranging between 0.5 and 5% by weight.

The varnishes are preferably water-based, and in addition to said synergic combination, contain conventional components such as acrylic-polyurethane resins or other resins compatible with the required use.

The varnish can be applied to the wood to be treated in a wholly conventional way, at the rate of 50-150 g of varnish per m² of surface area.

The varnishes of the invention do not cause any change in the initial colour of the wood, unlike known impregnation treatments, in particular when hindered amines wherein R₁=oxygen are used.

The following examples illustrate the invention in greater detail.

### Example 1

The following samples, each containing 1% of compound of formula (I) or (II) when used alone or 0.5% of compound of formula (I) + 0.5% of compound of formula (II) when mixed (the product content being expressed as a percentage on the weight of the varnish) were prepared from a colourless one-component water-based varnish with a 50% acrylic/polyurethane resin content:

| Sample | Compound of formula (I) | Compound of formula (II) |
|---|---|---|
| Sample 1 | R₁=H; R₂=OH; n=1 | - |
| Sample 2 | R₁=H; R₂=-NHC4H9; n=1 | - |
| Sample 3 | R₁=-CH₃; R₂= -OOC(CH₂)6COO-; n=2 | - |
| Sample 4 | - | R₁=H; R₂=H; R₃= -CH₃ |
| Sample 5 | - | R₁=Cl; R₂=tert-butyl; R₃=-CH₃ |
| Sample 6 | - | R₁=H; R₂=R₃= tert-amyl |
| Sample 7 | R₁=-CH₃; R₂= -OOC(CH₂)6COO-; n=2 | R₁=H; R₂=H; R₃= -CH₃ |
| Sample 8 | R₁-H; R₂=OH; n=1 | R₁=H; R₂=H; R₃= -CH₃ |
| Sample 9 | R₁=H; R₂=-NHC4H9; n=1 | R₁=H; R₂=H; R₃= -CH₃ |
| Sample 10 | R₁=H; R₂=OH; n=1 | R₁=Cl; R₂=tert-butyl; R₃=-CH₃ |
| Sample 11 | R₁=H; R₂=-NHC4H9; n=1 | R₁-Cl; R₂=tert-butyl; R₃=-CH₃ |
| Sample 12 | R₁=-CH₃; R₂= -OOC(CH₂)6COO-; n=2 | R₁=Cl; R₂=tert-butyl; R₃=-CH₃ |
| Sample 13 | R₁=H; R₂=-NHC4H9; n=1 | R₁-H; R₂=R₃= tert-amyl |
| Sample 14 | R₁=H; R₂=OH; n=1 | R₁-H; R₂=R₃= tert-amyl |

Samples of varnish with and without additives were applied to 7.5 x 15 cm panels of cherrywood, not artificially coloured, with a doctor blade, to a thickness of 100 microns, corresponding to approx. 105 g/m². Two coats were applied.

The panels were then exposed to accelerated aging in a Weatherometer (WOM) Atlas CI 65 by irradiating them at 340 nm with 0.5 W/m² and covering half of each varnished wood panel with silver paper to protect it against radiation. The temperature of the black WOM panel was 65°C.

Variations in colour between the exposed and unexposed parts were evaluated after 40 hour exposure, both visually and with a Spectraflash 500 spectrophotometer; measurements were taken at seven different points on each panel, and the average was calculated.

Table 1 below shows the results of the instrumental (DE) and visual evaluations. The visual evaluations are expressed on a scale from 0 to 5 (0= no variation; 5= maximum variation).

**Table 1**

| Sample | DE | Visual evaluation |
|---|---|---|
| Varnish without additives | 7 | 5 |
| Sample 1 | 5.3 | 4 |
| Sample 2 | 5.3 | 4 |
| Sample 3 | 6.6 | 4 |
| Sample 4 | 4.6 | 3 |
| Sample 5 | 4.5 | 3 |
| Sample 6 | 4.6 | 3 |
| Sample 7 | 3.5 | 2 |
| Sample 8 | 2.9 | 2 |
| Sample 9 | 3.2 | 2 |
| Sample 10 | 3.4 | 1 |
| Sample 11 | 3.5 | 2 |
| Sample 12 | 3.4 | 2 |
| Sample 13 | 3.5 | 2 |
| Sample 14 | 2.9 | 2 |

### Example 2

The procedure of Example 1 was repeated on maple wood, using a colourless one-component water-based varnish with a 50% polyurethane resin content, and adding to the varnish 1% of compounds of formula (I) and 0.5% of compounds of formula (II). When used alone, the compounds of formulae (I) and (II) were added at the rate of 1.5%. The results are set out in Table 2.

**Table 2**

| Compound of formula (I) | Compound of formula (II) | DE | Visual evaluation |
|---|---|---|---|
| - | - | 12.2 | 5 |
| R₁=H; R₂=OH; n=1 | | 7 | 4 |
| R₁=H; R₂=- NHC₄H₉; n=1 | | 7.5 | 4 |
| - | R₁=H; R₂-H; R₃= -CH₃ | 6 | 3 |
| - | R₁=Cl; R₂=tert-butyl; R₃=-CH₃ | 5.5 | 3 |
| - | R₁=H; R₂=R₃= tert-amyl | 5.5 | 3 |
| R₁=H; R₂=OH; n=1 | R₁=Cl; R₂=tert-butyl; R₃=-CH₃ | 4.3 | 2 |
| R₁=H; R₂=-NHC₄H₉; n=1 | R₁=Cl; R₂=tert-butyl; R₃=-CH₃ | 4.1 | 2 |
| R₁=H; R₂=OH; n=1 | R₁=H; R₂=R₃= tert-amyl | 4.2 | 2 |
| R₁=H; R₂=-NHC₄H₉; n=1 | R₁=H; R₂=R₃= tert-amyl | 4.5 | 2 |
| R₁=H; R₂=OH; n=1 | R₁=H; R₂=H; R₃= -CH₃ | 4.5 | 2 |
| R₁=H; R₂=-NHC₄H₉; n=1 | R₁=H; R₂=H; R₃= -CH₃ | 3.5 | 2 |

### Example 3

The procedure of Example 2 was repeated on ash wood, using a colourless one-component water-based varnish with a 50% polyacrylic resin content, and adding to the varnish 1% of compounds of formula (I) and 0.5% of compounds of formula (II). When used alone, the compounds of formulae (I) and (II) were added at the rate of 1.5%. The results are summarised in Table 3.

**Table 3**

| Compound of formula (I) | Compound of formula (II) | DE | Visual evaluation |
|---|---|---|---|
| - | - | 11.5 | 5 |
| R₁=H; R₂=OH; n=1 | | 7 | 4 |
| R₁-H; R₂=NHC₄H₉; n=1 | | 7.5 | 4 |
| - | R₁=H; R₂=H; R₃= -CH₃ | 5.5 | 3 |
| - | R₁=Cl; R₂=tert-butyl; R₃=-CH₃ | 6 | 3 |
| - | R₁=H; R₂=R₃= tert-amyl | 6 | 3 |
| R₁=H; R₂=OH; n=1 | R₁=Cl; R₂=tert-butyl; R₃=-CH₃ | 3.1 | 1 |
| R₁-H; R₂=-NHC₄H₉; n=1 | R₁=Cl; R₂=tert-butyl; R₃=-CH₃ | 3.1 | 1 |
| R₁=H; R₂=OH; n=1 | R₁=H; R₂=R₃= tert-amyl | 3.2 | 1 |
| R₁=H; R₂=-NHC₄H₉; n=1 | R₁=H; R₂=R₃= tert-amyl | 2.9 | 1 |
| R₁=H; R₂=OH; n=1 | R₁=H; R₂=H; R₃= -CH₃ | 2.7 | 1 |
| R₁=H; R₂=-NHC₄H₉; n=1 | R₁=H; R₂=H; R₃= -CH₃ | 2.7 | 1 |

### Example 4

Specimens of ash, maple and cherry wood measuring 6 x 10 mm were sandpapered and then varnished with a 100 micron coat of two-component acrylic/polyurethane varnish in an organic solvent. The varnishing was performed with or without the additives specified in Table 4 (expressed as a percentage on the weight of the varnish). A second 100 micron coat of the same varnish was applied after drying and sandpapering.

The dry specimens were exposed for 100 hours in WOM 65 with an irradiation density of 0.5 W/m² at 340 nm, half of each specimen being covered with silver paper to protect it against radiation. After exposure, the difference in colour between the exposed and unexposed parts was evaluated, both instrumentally (DE) and visually (VV) scale from 0 to 5, in which 0=no change; 5=maximum change).

**Table 4**

| Compound of formula (I) | Compound of formula (II) | Ash | | Maple | | Cherry | |
|---|---|---|---|---|---|---|---|
| | | DE | VV | DE | VV | DE | VV |
| -- | -- | 19.3 | 5 | 19.7 | 5 | 8.2 | 5 |
| R₁=H; R₂=OH; n=1; 1.5% | -- | 8.5 | 4 | 8.5 | 4 | 6.5 | 4 |
| R₁=-CH₃; R₂=-OOC(CH₂)₆COO-; n=2; 1% | -- | 7.5 | 4 | 8.0 | 4 | 6.5 | 4 |
| -- | R₁=H; R₂=H; R₃= -CH₃ 1% | 6.5 | 3 | 7.5 | 4 | 6 | 4 |
| -- | R₁=Cl; R₂=tert-butyl; R₃=-CH₃ 1% | 6.5 | 3 | 7.0 | 4 | 6 | 4 |
| -- | R₁=H; R₂=R₃= tert-amyl 1% | 6.5 | 3 | 7.0 | 4 | 6 | 4 |
| R₁=H; R₂=OH; n=1; 1% | R₁=H; R₂=H; R₃= -CH₃ 0.5% | 5.8 | 2 | 6.1 | 3 | 5.1 | 3 |
| R₁=-CH₃; R₂=-OOC(CH₂)₆COO-; n=2; 0.5% | R₁=H; R₂=H; R₃= -CH₃ 0.5% | 6.4 | 2 | 6.3 | 3 | 5.3 | 3 |
| R₁=H; R₂=OH n=1; 1% | R₁=Cl; R₂=tert-butyl; R₃=-CH₃ 0.5% | 2.8 | 1 | 6 | 2 | 4.1 | 2 |
| R₁=-CH₃; R₂=-OOC(CH₂)₆COO-; n=2; 0.5% | R₁=Cl; R₂=tert-butyl; R₃=-CH₃ 0.5% | 2.8 | 1 | 5.5 | 2 | 5.1 | 3 |
| R₁=H; R₂=OH n=1 1% | R₁=H; R₂-R₃= tert-amyl 0.5% | 4.8 | 2 | 6.1 | 2 | 5.5 | 3 |
| R₁=-CH₃; R₂=-OOC(CH₂)₆COO-; n=2; 0.5% | R₁=H; R₂=R₃= tert-amyl 0.5% | 4.8 | 2 | 5.9 | 2 | 5.5 | 3 |

### Example 5 (comparative example)

Cherrywood panels measuring 7.5 x 15 cm were impregnated with a brush as follows:
sample n°1: 2% solution in ethyl alcohol of the compound of formula (I) wherein n=1, R₁=H, R₂=OH;
sample n°2: 2% solution in butyl acetate of the compound of formula (II) wherein R₁=Cl; R₂=tert-butyl; R₃=-CH₃;
sample n°3: 1:1 solution of ethyl alcohol and butyl acetate containing 1% of the compound of formula (I) wherein n=1, R₁=H and R₂=OH, and 1% of the compound of formula (II) wherein R₁=Cl; R₂=tert-butyl; R₃=-CH₃.

After drying, the specimens were exposed to accelerated aging for 40 hours in WOM according to the procedures described in Example 1. The results, set out in Table 5, do not demonstrate any synergic effect.

**Table 5**

| | DE | Visual evaluation |
|---|---|---|
| without impregnation | 6.7 | 5 |
| sample 1 | 3.6 | 3 |
| sample 2 | 5 | 4 |
| sample 3 | 5.1 | 4 |

## Claims

1. Method for protecting the colour of wood against variations caused by sunlight, which involves varnishing the wood with colourless varnishes containing 0.1 to 5% of a mixture, in the ratio of 30:70 to 70:30, of:
a) at least one compound of formula (I) 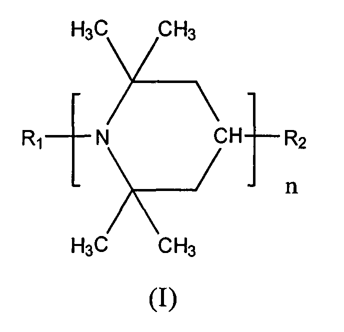 wherein:
R₁ = H, -CH₃
when n=1, R₂ represents -OH or -NHR₃ with R₃ = C₁-C₈ alkyl;
when n=2, R₂ represents the -OOC- (CH₂)m- COO- group with m = 1-8;
and
b) at least one compound of formula (II): 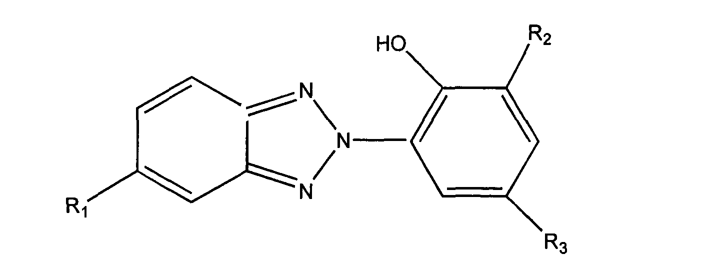
wherein:
R₁ = H or Cl;
R₂ and R₃, which are the same or different, represent hydrogen or alkyl C₁-C₅.

2. Method as claimed in claim 1, **characterised in that** the compounds of formula (I) are selected from those wherein n=1, R₁ represents H and R₂ represents -OH or -NH-n-butyl.

3. Method as claimed in claim 1, **characterised in that** the compounds of formula (I) are selected from those wherein n=2, R₁ represents methyl and R₂ represents the OOC-(CH₂)₆-COO- group.

4. Method as claimed in any one of claims 1 to 3, **characterised in that** the compounds of formula (II) are selected from those wherein R₁ and R₂ represent hydrogen and R₃ represents methyl or R₁ represents chlorine, R₂ tert-butyl and R₃ methyl.

5. Method as claimed in any one of claims 1 to 4, wherein the varnish is water-based.

6. Method as claimed in any one of claims 1 to 4, wherein the varnish has an organic solvent base.

7. Colourless varnishes for the protection of the natural colour of wood, in which 0.1% to 5% by weight of a mixture of the compounds as claimed in claim 1 is dissolved or dispersed.

8. Varnishes as claimed in claim 7, which are water-based.

9. Varnishes as claimed in claim 7, which have an organic solvent base.
